# EUROPÄISCHE PATENTSCHRIFT

(11) **EP 4 223 596 B1**
(45) Veröffentlichungstag und Bekanntmachung des Hinweises auf die Patenterteilung: **11.06.2025**
(21) Anmeldenummer: 23153313.4
(22) Anmeldetag: 25.01.2023
(51) Int. Cl.: B60R 22/18, B60N 2/00, B60R 22/22, B60R 22/26, B60N 2/68

(54) **GURTGESTELL FÜR EINEN FAHRZEUGSITZ**
BELT FRAME FOR A VEHICLE SEAT
CADRE DE CEINTURE POUR SIÈGE DE VÉHICULE

(30) Priorität: 04.02.2022 DE 102022102686
(43) Veröffentlichungstag der Anmeldung: 09.08.2023
(73) Patentinhaber: Aguti Produktentwicklung & Design GmbH, 88085 Langenargen (DE)
(72) Erfinder: Rogg, Christian, 88142 Wasserburg (DE)
(74) Vertreter: RavensPAT Patentanwälte Partnerschaft mbB

(56) Entgegenhaltungen:
- CN-A- 102 923 030
- DE-A1- 102019 206 965
- DE-U1- 202016 102 135
- DE-U1- 9 308 942
- US-A- 5 868 452
- US-A1- 2012 193 960
- US-A1- 2021 078 525
- US-B2- 9 108 555

## Beschreibung

### Stand der Technik

Vorrichtungen zur Anordnung eines Personenrückhaltesystems in einem Verkehrsmittel sind beispielsweise aus der CN 102 923 030 A bekannt, beispielsweise zur Anbringung einer Sicherheitsgurtanordnung zur Personensicherung und von Komponenten eines dazugehörigen Personensitzes im Verkehrsmittel. Solche Vorrichtungen werden auch als Gurtgestelle bezeichnet.

In Verkehrsmitteln, wie Fahrzeugen, beispielsweise Personenkraftwagen, Kleinbussen, Wohnmobilen oder Camping-Mobilen werden solche Vorrichtungen als eine Baueinheit für einen nach der Herstellung des Fahrzeugs nachträglichen Einbau im Fahrzeuginneren bereitgestellt. Die Vorrichtung mit dem daran vorhandenen Personenrückhaltesystem muss für im Fahrzeug auftretende maximale Belastungssituationen ausgelegt sein, die insbesondere im Zusammenhang mit Unfallszenarien im Straßenverkehr auftreten können.

Bei der Auslegung der Vorrichtung sind insbesondere Sicherheits- bzw. Stabilitätskriterien zu erfüllen, welche zum Beispiel für eine Zulassung der Vorrichtung bzw. des Fahrzeugs erforderlich sind. Die kostengünstige und wirtschaftlich vorteilhafte Ausbildung bzw. Herstellung der Vorrichtung stellt dabei eine besondere Herausforderung dar.

### Aufgabe und Vorteile der Erfindung

Aufgabe der vorliegenden Erfindung ist es, eine verbessertes Gurtgestell der einleitend beschriebenen Art bereitzustellen.

Beispielsweise soll ein verbessertes Gurtgestell bereitgestellt werden, bei welchem technische und wirtschaftliche Verbesserungen unter Beibehaltung von Stabilitäts- und Sicherheitskriterien vorteilhaft erfüllt werden.

Diese Aufgabe wird durch die unabhängigen Ansprüche gelöst.

Die abhängigen Ansprüche betreffen vorteilhafte und zweckmäßige Weiterbildungen der Erfindung.

Die Erfindung geht von einem Gurtgestell für einen Fahrzeugsitz in einem Fahrzeug oder für eine Fahrzeugsitzbank in einem Fahrzeug aus, wobei das Gurtgestell ein Anbringelement, eine Vertikalstrebe und ein Personenrückhaltesystem aufweist, wobei das Anbringelement dazu ausgebildet ist, an einer Fahrzeugstruktur des Fahrzeugs im Bereich eines Fahrzeugbodens angeordnet zu werden, sodass das Gurtgestell im Bereich des Fahrzeugbodens fixierbar ist, wobei die Vertikalstrebe an einem ersten Ende der Vertikalstrebe mit dem Anbringelement verbunden ist, wobei eine Längsachse der Vertikalstrebe sich in Richtung der Vertikalen erstreckt, wobei ein Rückhalteorgan des Personenrückhaltesystems am Anbringelement befestigt ist. Hierdurch ist das Gurtgestell mit dem Personenrückhaltesystem vergleichsweise einfach und zeitsparend am Fahrzeug montierbar. Auch ist hierdurch das Gurtgestell mit Elementen des Personenrückhaltesystems vergleichsweise kompakt aufgebaut.

Zum Beispiel ist das Fahrzeug als ein Automobil, als ein Autobus, als ein Lastkraftwagen (LKW), als ein Caravan, als ein Wohnmobil oder auch als ein Camping-Mobil ausgebildet.

Ein Personenrückhaltesystem ist vorteilhafterweise als eine Sicherheitsgurtanordnung, z.B. als ein Mehrpunktgurt-Sicherheitssystem oder als ein Dreipunktgurt-Sicherheitssystem ausgebildet. Beispielsweise ist das Rückhalteorgan als ein Rückhalteelement vorhanden. Zum Beispiel ist das Rückhalteorgan als ein Gurtaufroller, als eine Gurtumlenkanordnung zur Richtungsänderung des daran vorbeigeführten Gurts und/oder als eine Halterung zur Fixierung eines Gurtendes eines Gurts des Personenrückhaltesystems vorhanden. Das Rückhalteorgan ist als ein Gurtschloss, an dem ein Einsteckteil lösbar einrastbar ist, vorhanden. Beispielsweise ist der Gurt mittels des Einsteckteils als eine Schlaufe ausziehbar vorhanden.

Beispielsweise muss das vorgeschlagene Gurtgestell konstruktiv bzw. mechanisch so ausgelegt sein, um einer maximal tolerierbaren bzw. möglichen Belastung, insbesondere bei dynamischen Belastungsvorgängen, einen ausreichenden Widerstand entgegensetzen zu können, also entsprechende Kräfte und Momente aufzunehmen und weitergeben zu können. Beispielsweise muss das vorgeschlagenen Gurtgestell die vorhandenen Normen zur Typengenehmigung in Fahrzeugen erfüllen. Zum Beispiel muss das Gurtgestell die Verordnung (EG) 661/2009 des Europäischen Parlaments und des Rates und deren Änderungsnormen, die Verordnung (EU) 407/2011 des Europäischen Parlaments und des Rates der Europäischen Union und/oder die Regelung Nr. 14 der Wirtschaftskommission der Vereinten Nationen für Europa (UN/ECE) erfüllen. Zum Beispiel muss das vorgeschlagene Gurtgestell im angeordneten Zustand derart mit dem Fahrzeug verbunden sein, dass eine maximal tolerierbare bzw. mögliche Belastung, insbesondere bei dynamischen Belastungsvorgängen, aufgenommen werden kann. Beispielsweise muss das Gurtgestell bei einer maximal tolerierbaren bzw. mögliche Belastung einen ausreichenden Widerstand entgegensetzen können, also entsprechende Kräfte und Momente aufnehmen und an das Fahrzeug weitergeben können.

Beispielsweise erstreckt sich eine Ebene eines Fahrzeugbodens des Fahrzeugs in Fahrtrichtung des Fahrzeugs. Denkbar ist auch, dass die Ebene des Fahrzeugbodens sich quer zur Fahrtrichtung des Fahrzeugs erstreckt. Vorstellbar ist, dass der Fahrzeugboden als ein Innenraumfahrzeugboden vorhanden ist. Vorstellbar ist auch, dass eine Fahrzeugträgerstruktur des Fahrzeugs den Fahrzeugboden bildet. Zum Beispiel ist die Ebene des Fahrzeugbodens parallel zu einer Fahrebene des Fahrzeugs ausgerichtet vorhanden.

Beispielsweise ist eine Fahrtrichtung des Fahrzeugs in eine Sitzrichtung oder Blickrichtung eines Fahrers des Fahrzeugs zur Fahrzeugfront des Fahrzeugs zu sehen. Zum Beispiel ist die Fahrtrichtung des Fahrzeugs eine Fahrtrichtung des Fahrzeugs in Vorwärtsrichtung. Zum Beispiel wird die Fahrebene des Fahrzeugs durch eine Straße gebildet, auf welcher das Fahrzeug fährt. Beispielsweise erstreckt sich die Fahrtrichtung des Fahrzeugs in einer Richtung von einem Fahrzeugheck des Fahrzeugs zur Fahrzeugfront des Fahrzeugs.

Beispielswiese weist die Vertikalstrebe ein zweites Ende auf. Zum Beispiel ist im Bereich des zweiten Endes der Vertikalstrebe ein Rückhalteelement des Personenrückhaltesystems ausgebildet. Beispielsweise ist das zweite Ende der Vertikalstrebe vom ersten Ende der Vertikalstrebe beabstandet vorhanden. Vorstellbar ist auch, dass eine Längsachse der Vertikalstrebe vom ersten Ende der Vertikalstrebe zum zweiten Ende der Vertikalstrebe verläuft, wobei die Vertikalstrebe vom ersten Ende zum zweiten Ende geradlinig verläuft.

Das Gurtumlenkelement ist im Bereich des zweiten Endes der Vertikalstrebe, **z.B.** als eine Gurtumlenkrolle, ausgebildet. Denkbar ist jedoch auch, dass das Rückhalteelement als ein Gurtumlenkpunkt oder als ein Gurtankerpunkt vorhanden ist. Beispielsweise ist das Rückhalteelement in Form einer Öse oder einer Öffnung vorhanden. Zum Beispiel ist durch die Öse oder die Öffnung der Gurt des Personenrückhaltesystems durchführbar, sodass die Öse oder die Öffnung eine Führung für den Gurt bildet.

Das Personenrückhaltesystem umfasst einen Gurt, einen Gurtaufroller, eine Gurtschließe, ein Gurtschloss und ein Gurtumlenkelement. Vorstellbar ist, dass das Personenrückhaltesystem auch ein weiteres Rückhalteelement umfasst. Zum Beispiel ist das Personenrückhaltesystem als ein 3-Punkt-Gurtsystem ausgebildet. Zum Beispiel ist der Gurt als ein Sicherheitsgurt vorhanden.

Vorstellbar ist auch, dass bis auf das Rückhalteelement, welches an der Vertikalstrebe vorhanden ist, alle weiteren Elemente des Gurtrückhaltesystems mit dem Anbringelement verbunden sind. Beispielsweise ist das Rückhaltelement unmittelbar mit der Vertikalstrebe verbunden. Beispielsweise sind das Rückhalteelement und die Vertikalstrebe unlösbar miteinander verbunden. Zum Beispiel sind das Rückhalteelement und die Vertikalstrebe miteinander verschweißt.

Zum Beispiel ist die Vertikalstrebe einstückig ausgebildet. Denkbar ist, dass die Vertikalstrebe als ein Vierkantrohr vorhanden ist. Beispielweise ist die Vertikalstrebe aus Metall ausgebildet. Beispielsweise verläuft die Vertikalstrebe vom ersten Ende zum zweiten Ende durchgehend geradlinig.

Beispielsweise erstreckt sich die Vertikalstrebe entlang der Längsachse vom ersten Ende bis zum zweiten Ende über eine Länge größer 0,4m, größer 0,5m, größer 0,6m, größer 0,7m, größer 0,8m oder größer 0,9m. Zum Beispiel erstreckt sich die Vertikalstrebe entlang der Längsachse vom ersten Ende bis zum zweiten Ende über eine Länge von bis zu 1,3m, bis zu 1,4m, bis zu 1,5m, bis zu 1,6m, bis zu 1,7m, bis zu 1,8m, bis zu 1,9m oder bis zu 2m. Vorstellbar ist, dass die Vertikalstrebe entlang der Längsachse vom ersten Ende bis zum zweiten Ende eine Länge zwischen 0,4m und 2m, zwischen 0,4m und 1,7m, zwischen 0,5m und 1,7m oder zwischen 0,7m und 1,4m aufweist.

Beispielsweise umfasst das Gurtgestell eine einzige Vertikalstrebe. Hierdurch ist das Gurtgestell vergleichsweise kostengünstig ausbildbar oder vergleichsweise einfach herstellbar. Denkbar ist aber auch, dass das Gurtgestell genau zwei Vertikalstreben aufweist. Vorstellbar ist, dass die genau zwei Vertikalstreben in einer Richtung quer zu den Längsachsen der Vertikalstreben voneinander beabstandet vorhanden sind. Zum Beispiel sind die genau zwei Vertikalstreben entlang ihrer Längsachsen miteinander verbunden, z.B. unmittelbar miteinander verbunden. Beispielsweise sind die Längsachsen der beiden Vertikalstreben zueinander parallel ausgerichtet vorhanden. Vorstellbar ist außerdem, dass das Gurtgestell zwei oder mehr Vertikalstreben aufweist.

Beispielsweise ist im angeordneten Zustand des Gurtgestells am Fahrzeugboden des Fahrzeugs die Längsachse der Vertikalstrebe relativ zu der Normalen der Ebene des Fahrzeugbodens gekippt vorhanden. Hierdurch ist ein Raum im Fahrzeug vergleichsweise besser nutzbar vorhanden.

Beispielsweise schließen die Längsachse der Vertikalstrebe und die Normale des Fahrzeugbodens einen Winkel α ein. Zum Beispiel ist der Winkel α 0° oder größer als 0°. Beispielsweise ist der Winkel α zwischen 0° bis 45°, zwischen 0° bis 30°, zwischen 0° bis 25° oder zwischen 3° bis 25°. Zum Beispiel ist der Winkel α 0°, 3°, 4°, 5°, 6°, 7°, 8°, 9°, 10°, 15°, 20° oder 25° groß.

Das Anbringelement ist als eine Platte, als ein Winkelblech oder als eine Leiste ausgebildet. Hierdurch ist das Anbringelement vergleichsweise kostengünstig ausgebildet. Das Anbringelement kann plattenförmig, z.B. in Form einer Platte, ausgebildet sein.

Beispielsweise ist das Anbringelement als eine abgewinkelte Platte vorhanden. Zum Beispiel ist das Anbringelement L-profilförmig oder U-profilförmig ausgebildet. Beispielsweise ist das Anbringelement als eine leistenförmige, z.B. abgewinkelte Platte vorhanden. Zum Beispiel ist das Anbringelement als ein einstückiges Element vorhanden.

Auch wird vorgeschlagen, dass das Anbringelement aus Metall ausgebildet ist. Hierdurch ist das Anbringelement vergleichsweise stabil ausgebildet, um die im möglichen Belastungsfall auftretenden Kräfte aufnehmen und/oder weiterleiten zu können.

Beispielsweise erstreckt sich eine Längsachse des Anbringelements im angeordneten Zustand des Gurtgestells am Fahrzeug quer zur Fahrtrichtung des Fahrzeugs. Beispielsweise erstreckt sich die Längsachse des Anbringelements senkrecht zur Fahrtrichtung des Fahrzeugs. Zum Beispiel erstreckt sich das Anbringelement in einer Anbringelementebene. Beispielsweise ist im angeordneten Zustand des Gurtgestells am Fahrzeug die Anbringelementebene parallel zur Ebene des Fahrzeugbodens ausgerichtet vorhanden.

Beispielsweise erstreckt sich das Anbringelement entlang seiner Längsachse in eine Länge und in einer Richtung quer zur Längsachse in eine Breite. Beispielsweise ist ein Verhältnis der Länge des Anbringelements zur Breite des Anbringelements größer 2:1, größer 3:1 oder größer 4:1. Beispielsweise erstreckt sich das Anbringelement in eine dritte Richtung, quer zur Längsachse des Anbringelements und quer zur Breitenerstreckung in eine Höhe.

Beispielsweise ist die Länge des Anbringelements größer 0,5m, größer 0,6m, größer 0,8m oder größer 1m. Zum Beispiel ist die Länge des Anbringelements zwischen 0,5m und 1,2m, zwischen 0,6m und 1,2m, zwischen 0,7 und 1,1m oder zwischen 0,8m und 1m lang. Vorstellbar ist, dass das Anbringelement sich entlang der Längsachse des Anbringelements in einer Länge von 0,5m, 0,59m, 0,6m, 0,65m, 0,7m, 0,76m, 0,8m, 0,9m, 1m, 1,1m oder 1,2m erstreckt.

Beispielsweise ist das Anbringelement in der Breite breiter als 0,1m, breiter als 0,2m oder breiter als 0,3m. Beispielsweise ist das Anbringelement in der Breite kleiner als 0,6m, kleiner als 0,5m, kleiner als 0,4m, kleiner als 0,35m oder kleiner als 0,2m. Beispielsweise erstreckt sich das Anbringelement in der Breite über mehr als 0,1m, über mehr als 0,2m, über mehr als 0,3m oder über 0,4m. Beispielsweise erstreckt sich das Anbringelement in Breitenrichtung in einer Breite zwischen 0,1m und 0,6m, zwischen 0,15m und 0,5m oder zwischen 0,15m und 0,4m.

Beispielsweise erstreckt sich das Anbringelement in Höhenrichtung über eine Höhe von mehr als 0,05m, von mehr als 0,1m, von mehr als 0,15m, von mehr als 0,2m oder von mehr als 0,3m. Beispielsweise erstreckt sich das Anbringelement in Höhenrichtung in einer Höhe zwischen 0,05m und 0,4m, in einer Höhe zwischen 0,05m und 0,3m oder in einer Höhe zwischen 0,05m und 0,25m. Beispielsweise ist die Höhe des Anbringelements 0,05m, 0,1m, 0,15m, 0,2m, 0,25m, 0,3m oder 0,4m.

Zum Beispiel schließen die Längsachse der Vertikalstrebe und die Anbringelementebene oder schließen die Längsachse der Vertikalstrebe und die Ebene des Fahrzeugbodens einen Winkel β ein. Zum Beispiel ist der Winkel β 90° oder kleiner als 90°. Beispielsweise ist der Winkel β zwischen 90° bis 45°, zwischen 90° bis 60°, zwischen 90° bis 65° oder zwischen 87° bis 65°. Zum Beispiel ist der Winkel β 90°, 87°, 86°, 85°, 84°, 83°, 82°, 81°, 80°, 75°, 70° oder 65° groß.

Ebenfalls wird vorgeschlagen, dass die Vertikalstrebe unlösbar mit dem Anbringelement verbunden ist. Hierdurch ist eine vergleichsweise stabile Verbindung zwischen Vertikalstrebe und Anbringelement realisiert.

Beispielsweise ist die Vertikalstrebe am ersten Ende mit dem Anbringelement fest, z.B. unlösbar verbunden. Vorstellbar ist, dass die Vertikalstrebe am ersten Ende mit dem Anbringelement verschweißt ist. Denkbar ist auch, dass die Vertikalstrebe am ersten Ende mit dem Anbringelement verschraubt oder vernietet ist.

Außerdem wird vorgeschlagen, dass das Anbringelement eine Anbringebene aufweist, wobei das Anbringelement mit der Anbringebene am Fahrzeugboden des Fahrzeugs und/oder einer Fahrzeugstruktur des Fahrzeugs anliegend montierbar ist, wobei die Längsachse der Vertikalstrebe zur Normalen der Anbringebene des Anbringelements gekippt vorhanden ist. Beispielsweise sind die Normale der Anbringebene und die Normale der Ebene des Fahrzeugbodens im angeordneten Zustand des Gurtgestells zueinander parallel ausgerichtet vorhanden.

Außerdem wird vorgeschlagen, dass das Gurtgestell eine Horizontalstrebe aufweist, wobei die Horizontalstrebe an der Vertikalstrebe angeordnet ist, wobei die Horizontalstrebe vom Anbringelement beabstandet vorhanden ist. Beispielsweise ist durch die Horizontalstrebe ein Gurtgestell für eine Fahrzeugsitzbank mit zwei oder mehr Sitzplätzen realisierbar. Vorstellbar ist, dass die Horizontalstrebe unmittelbar mit der Vertikalstrebe verbunden ist. Beispielsweise ist die Horizontalstrebe mit der Vertikalstrebe verschraubt und/oder verschweißt. Zum Beispiel sind die Vertikalstrebe und die Horizontalstrebe unlösbar miteinander verbunden.

Zum Beispiel verläuft eine Längsachse der Horizontalstrebe quer zur Längsachse der Vertikalstrebe. Denkbar ist, dass die Längsachse der Horizontalstrebe quer zur Fahrtrichtung des Fahrzeugs vorhanden ist. Zum Beispiel ist die Längsachse der Horizontalstrebe senkrecht zur Fahrtrichtung des Fahrzeugs ausgerichtet. Beispielsweise ist die Längsachse der Horizontalstrebe quer zu der Normalen der Ebene des Fahrzeugbodens ausgerichtet.

Beispielsweise ist die Vertikalstrebe und/oder die Horizontalstrebe als ein Hohlprofil ausgebildet. Im Querschnitt ist das Hohlprofil typischerweise rechteckig oder quadratisch vorhanden, denkbar ist aber auch, dass das Hohlprofil im Querschnitt rund oder elliptisch ausgebildet ist. Ein typisches Längen- und/oder Breitenmaß bzw. Seitenmaß des Querschnitts des Hohlprofils beträgt ca. 20 bis 40 Millimeter. Beispielsweise liegt eine Wanddicke des Hohlprofils in der Regel in einem einstelligen Millimeterbereich. Denkbar ist auch, dass das Hohlprofil als ein Mehrfachhohlprofil vorhanden ist. Beispielsweise ist die Horizontalstrebe als ein Vierkantrohr vorhanden.

Des Weiteren ist es vorstellbar, dass das Hohlprofil, insbesondere die Vertikalstrebe, eine Materialausnehmung **z.B.** eine Schlitzung aufweist, welche als Soll-Biegestelle im Belastungsfall des angeordneten Gurtgestells, **z.B.** in einem Crashfall des Fahrzeugs ausgebildet ist. Damit ist ein plastisches Verformungsverhalten der Vertikalstrebe in einem Belastungsfall beeinflussbar, insbesondere vorgebbar. Beispielsweise erstreckt sich die Ausnehmung an der Vertikalstützte insbesondere in horizontaler Richtung über eine Vorderseite der Vertikalstrebe und über zumindest einen an die Vorderseite anschließenden seitlichen Bereich der Vertikalstrebe. Zum Beispiel erstreckt sich die Materialausnehmung abschnittsweise auf der Vorderseite und auf zwei seitlich an die Vorderseite anschließende sich gegenüberliegende seitliche Bereiche der Vertikalstrebe. Die Vorderseite ist bezogen auf einen Anbringzustand des Gurtgestells im Fahrzeug zu verstehen und damit beispielsweise im angeordneten Zustand am Fahrzeug der Fahrzeugfront zugewandt.

Ein mit dem Gurtgestell bildbarer Fahrzeug- bzw. Personensitz weist demgemäß eine Sitzstruktur mit einer Sitzfläche auf, welche sich an der Vorderseite des Personensitzes und damit an der Vorderseite des Gurtgestell bzw. der Vorderseite der Vertikalstrebe und/oder einer Vorderseite der Horizontalstrebe befindet, wobei die Vorderseite der Vertikalstrebe und/oder die Vorderseite der Horizontalstrebe beispielsweise in Fahrtrichtung ausgerichtet ist.

Im eingebauten Zustand des Gurtgestells im Fahrzeug entspricht die relevante Belastungsrichtung in der Regel einer Sitzrichtung der gesicherten Person bzw. der Fahrtrichtung des Fahrzeugs. Bei einem Fahrzeug tritt eine maximale Belastung **z.B.** bei einem Aufprall des fahrenden Fahrzeugs gegen ein Hindernis auf, einem Crashfall. Aufgrund der abgebremsten Masse der im Fahrzeug sitzenden und gesicherten Person wird über den Sicherheitsgurt des Personenrückhaltesystems eine ruckartig wirkende Zugkraft bzw. ein daraus resultierendes Moment in der Belastungsrichtung bzw. in Fahrtrichtung an der Stützanordnung wirksam.

Weiter wird vorgeschlagen, dass ein Schließelement des Personenrückhaltesystems an der Horizontalstrebe vorhanden ist. Beispielsweise sind zwei Schließelemente an der Horizontalstrebe vorhanden, wobei die zwei Schließelemente voneinander beabstandet vorhanden sind. Vorstellbar ist auch, dass an der Horizontalstrebe ein Gurtschloss des Personenrückhaltesystems anordenbar oder angeordnet ist. Beispielsweise ist das Schließelement als ein Gurtschloss des Personenrückhaltesystems ausgebildet. Zum Beispiel ist das Schließelement als ein Rückhalteorgan oder ein Rückhalteelement des Personenrückhaltesystems vorhanden.

Auch wird vorgeschlagen, dass ein Schließelement des Personenrückhaltesystems am Anbringelement angeordnet ist. Beispielsweise ist das Schließelement als eine Gurtschließe und/oder als ein Gurtschloss ausgebildet. Hierdurch ist das Gurtgestell vergleichsweise kostengünstig herstellbar. Beispielsweise ist hierdurch eine Montage des Gurtgestells beispielsweise erleichtert, insbesondere vergleichsweise kostengünstig realisiert.

Das Gurtgestell weist eine Gurtpeitsche auf, wobei das Rückhalteorgan des Personenrückhaltesystems über die Gurtpeitsche mit dem Anbringelement verbunden ist.

Weiter wird vorgeschlagen, dass am Anbringelement zwei oder mehr Rückhalteorgane des Personenrückhaltesystems angeordnet sind.

Beispielsweise ist das Schließelement über ein Verlängerungselement am Anbringelement angeordnet. Zum Beispiel sind zwei oder mehr Schließelemente am Anbringelement angeordnet. Zum Beispiel ist das Verlängerungselement als eine Gurtpeitsche ausgebildet. Zum Beispiel sind am Anbringelement genau ein Schließelement, genau zwei Schließelemente oder genau drei Schließelemente angeordnet. Beispielsweise ist die Anzahl der Schließelemente am Anbringelement abhängig von der Anzahl der mit dem Gurtgestell realisierbaren Fahrzeugsitze.

Die Gurtpeitsche ist in Form eines Gurtbands und/oder in Form eines Metallbands vorhanden. Beispielsweise ist die Gurtpeitsche in Form einer Metallstrebe vorhanden.

Am Anbringelement oder an der Vertikalstrebe ist der Gurtaufroller befestigt. Beispielsweise ist das Rückhalteelement als das Schließelement und/oder als ein Gurtaufroller ausgebildet. Beispielsweise ist der Sicherheitsgurt mit einem ersten Ende mit dem Anbringelement verbunden. Zum Beispiel ist der Sicherheitsgurt mit dem ersten Ende unmittelbar mit dem Anbringelement verbunden. Beispielsweise ist der Sicherheitsgurt am ersten Ende des Sicherheitsgurts am Anbringelement befestigt. Zum Beispiel ist der Sicherheitsgurt mit einem zweiten Ende des Sicherheitsgurts mit dem Gurtaufroller verbunden. Beispielsweise ist der Sicherheitsgurt durch den Gurtaufroller aufrollbar oder aufwickelbar vorhanden. Beispielsweise erstreckt sich der Sicherheitsgurt vom ersten Ende bis zum zweiten Ende entlang seiner Längserstreckung.

Außerdem wird vorgeschlagen, dass am Anbringelement ein Stützelement und/oder ein Stützfuß angeordnet ist.

Beispielsweise umfasst das Gurtgestell ein Stützelement. Denkbar ist, dass das Stützelement in Form eines Stützfuß vorhanden ist. Zum Beispiel ist das Stützelement im angeordneten Zustand des Gurtgestells am Fahrzeug mit einem ersten Ende des Stützelements am Anbringelement anstehend vorhanden und mit einem zweiten Ende des Stützelements an der Vertikalstrebe angeordnet. Denkbar ist, dass das Stützelement mit dem zweiten Ende mit der Vertikalstrebe verschraubt und/oder verschweißt vorhanden ist. Denkbar ist auch, dass im angeordneten Zustand des Gurtgestells am Fahrzeug das Stützelement mit dem zweiten Ende des Stützelement mit der Vertikalstrebe verbunden ist und mit dem ersten Ende mit dem Fahrzeug, mit dem Fahrzeugboden des Fahrzeugs oder mit dem Fahrzeugrahmen des Fahrzeugs. Beispielsweise im angeordneten Zustand des Gurtgestells am Fahrzeug das Stützelement mit dem ersten Ende des Stützelement unmittelbar aufstehend oder anliegend am Fahrzeugboden vorhanden. Vorstellbar ist auch, dass das Stützelement lösbar mit der Vertikalstrebe verbindbar ist, sodass zunächst das Gurtgestell mit dem Anbringelement am Fahrzeug montierbar ist und anschließend das Stützelement montierbar ist.

Zum Beispiel ist das Stützelement aus Metall ausgebildet. Vorstellbar ist, dass das Stützelement als ein Vierkantrohr vorhanden ist. Denkbar ist auch, dass das Stützelement als ein Metallband oder als ein Metallblech vorhanden ist. Beispielsweise ist ein Stützelement als ein Blech und/oder als ein Winkelblech ausgebildet. Beispielsweise ist das Stützelement leistenförmig ausgebildet. Beispielweise umfasst das Stützelement an seinen Enden Verbindungselemente zum Verbinden des Stützelements mit der Vertikalstrebe und/oder dem Anbringelement.

Beispielsweise erstreckt sich das Stützelement ausgehend vom zweiten Ende des Stützelements in Fahrtrichtung weg von der Vertikalstrebe in Richtung Fahrzeugboden. Denkbar ist auch, dass das Stützelement sich ausgehend vom zweiten Ende des Stützelements entgegen der Fahrtrichtung weg von der Vertikalstrebe in Richtung Fahrzeugboden erstreckt.

Zum Beispiel weist die Vertikalstrebe einen Anbindungsbereich zur Anbindung des zweiten Endes des Stützelements auf. Beispielsweise ist das Stützelement mit seinem zweiten Ende am Anbindungsbereich mit der Vertikalstrebe verschraubt und/oder verschweißt. Zum Beispiel ist der Anbindungsbereich der Vertikalstrebe ausgehend vom ersten Ende der Vertikalstrebe zwischen dem Anbringelement und der Horizontalstrebe ausgebildet. Beispielsweise ist der Anbindungsbereich ausgehend vom ersten Ende der Vertikalstrebe in einem Abstand von kleiner einer halben Erstreckung der Vertikalstrebe entlang der Längsachse vom ersten bis zum zweiten Ende der Vertikalstrebe ausgebildet. Zum Beispiel ist der Anbindungsbereich ausgehend vom ersten Ende der Vertikalstrebe in einem Abstand von kleiner einem Drittel der Erstreckung der Vertikalstrebe entlang der Längsachse vom ersten bis zum zweiten Ende der Vertikalstrebe ausgebildet.

Beispielsweise erstreckt sich das Stützelement ausgehend vom ersten Ende des Stützelements bis zum zweiten Ende des Stützelements entlang einer Längsachse des Stützelements. Zum Beispiel erstreckt sich das Stützelement durchgehend geradlinig entlang seiner Längsachse. Beispielsweise ist das Stützelement mit seiner Längsachse in eine gleiche Richtung wie die Längsachse der Vertikalstrebe gekippt vorhanden. Beispielsweise liegen die Längsachse des Stützelements und die Längsachse der Vertikalstrebe in einer Längsachsen-Ebene. Zum Beispiel ist die Längsachsen-Ebene quer, beispielsweise senkrecht, zur Anbringelementebene und/oder quer, beispielsweise senkrecht, zur Ebene des Fahrzeugbodens ausgerichtet. Zum Beispiel spannen die Längsachse der Vertikalstrebe und die Längsachse des Stützelements eine Ebene auf, welche senkrecht zur Anbringelementebene ausgerichtet vorhanden ist. Beispielsweise ist im angeordneten Zustand des Gurtgestells am Fahrzeug die durch die beiden Längsachsen der Vertikalstrebe und des Stützelements aufgespannte Ebene senkrecht zur Ebene des Fahrzeugbodens ausgerichtet vorhanden.

Auch wird vorgeschlagen, dass das Gurtgestell zwei Stützelemente aufweist. Hierdurch ist eine Abstützung der Vertikalstrebe des Gurtgestells verbessert. Beispielsweise ist ein einziges Stützelement vorhanden. Vorstellbar ist auch, dass ein Stützelement in Form eines Stützfuß ausgebildet ist. Denkbar ist auch, dass genau zwei Stützelement vorhanden sind.

Beispielswiese ist ein erstes Stützelement um den gleichen Winkel und die gleiche Richtung relativ zum Fahrzeugboden gekippt vorhanden, wie die Vertikalstrebe. Zum Beispiel ist dieses erste Stützelement in Form eines Stützfuß ausgebildet und erstreckt sich ausgehend von seinem zweiten Ende, mit welchem das erste Stützelement an der Vertikalstrebe angeordnet ist, in Fahrtrichtung und in Richtung Anbringelement und ist mit seinem ersten Ende am Anbringelement angeordnet vorhanden.

Zum Beispiel sind zwei Stützelemente vorhanden, wobei ein erstes Stützelement die Vertikalstrebe in eine erste Richtung abstützt, z.B. in eine Fahrtrichtung des Fahrzeugs, und ein zweites Stützelement die Vertikalstrebe in eine zweite Richtung abstützt, wobei die erste und die zweite Richtung quer zueinander ausgerichtet vorhanden sind.

Außerdem wird vorgeschlagen, dass am Anbringelement ein Montageorgan ausgebildet ist, wobei das Montageorgan dazu ausgebildet ist, im angeordneten Zustand des Gurtgestells am Fahrzeug das Anbringelement mit einer Fahrzeugstruktur eines Fahrzeugs zu verbinden. Hierdurch ist das Gurtgestell vergleichsweise einfach und schnell und damit kostengünstig am Fahrzeug montierbar.

Beispielsweise ist das Montageorgan als eine Durchgangsöffnung, z.B. als eine Bohrung am Anbringelement vorhanden. Denkbar ist auch, dass das Montageorgan ein Gewinde aufweist. Beispielsweise weist das Montageorgan ein Innengewinde auf. Denkbar ist auch, dass das Montageorgan als eine Gewindestange oder als ein Bolzen, z.B. als ein Gewindebolzen, ausgebildet ist. Beispielsweise ist das Montageorgan abstehend vom Anbringelement vorhanden. Denkbar ist, dass das Montageorgan mit dem Anbringelement einstückig vorhanden ist. Zum Beispiel ist das Montageorgan unlösbar mit dem Anbringelement verbunden. Beispielsweise ist das Montageorgan mit dem Anbringelement verschweißt. Vorstellbar ist auch, dass zwei oder mehr Montageorgane am Anbringelement vorhanden sind. Beispielsweise sind die mehreren Montageorgane am Anbringelement zueinander beabstandet ausgebildet.

Ebenfalls wird eine Fahrzeug-Sitzanordnung mit einem Gurtgestell nach einer der vorangegangen genannten Ausführungsformen vorgeschlagen. Beispielsweise ist die Fahrzeug-Sitzanordnung als ein Fahrzeugsitz und/oder als eine Fahrzeugsitzbank ausgebildet.

Außerdem wird ein Fahrzeug mit einer Fahrzeug-Sitzanordnung nach einer der vorangegangen genannten Ausführungsformen oder mit einem Gurtgestell nach einer der vorangegangen genannten Ausführungsformen vorgeschlagen.

### Figurenbeschreibung

Weitere Merkmale und Vorteile der Erfindung sind anhand schematisch gezeigter Ausführungsbeispiele näher erläutert. Im Einzelnen zeigt:
- Figur 1: eine schematische Frontansicht auf ein Gurtgestell im angeordneten Zustand an einem Fahrzeugboden eines Fahrzeugs,
- Figur 2: eine schematische Frontansicht auf eine weitere Ausführungsform eines Gurtgestells im angeordneten Zustand an einem Fahrzeugboden eines Fahrzeugs,
- Figur 3: eine schematische, perspektivische Ansicht von seitlich, hinten oben auf eine weitere Ausführungsform eines Gurtgestells,
- Figur 4: eine schematische Rückansicht auf das Gurtgestell gemäß Figur 3,
- Figur 5: eine schematische Seitenansicht auf das Gurtgestell gemäß Figur 3,
- Figur 6: eine schematische, perspektivische Ansicht von seitlich, hinten oben auf eine weitere Ausführungsform eines Gurtgestells,
- Figur 7: eine schematische Unteransicht auf das Gurtgestell gemäß Figur 6,
- Figur 8: eine schematische Seitenansicht auf das Gurtgestell gemäß Figur 6,
- Figur 9: eine schematische Rückansicht auf das Gurtgestell gemäß Figur 6,
- Figur 10: eine schematische, seitliche Teilansicht auf ein Gurtgestell mit einer Darstellung von möglichen Ausbildungsvarianten eines Stützelements am Gurtgestell und
- Figur 11: eine schematische Frontansicht auf ein Gurtgestell mit zwei Vertikalstreben.

Im Folgenden werden zum leichteren Verständnis für gleiche Elemente unterschiedlicher Ausführungsformen gleiche Bezugszeichen verwendet.

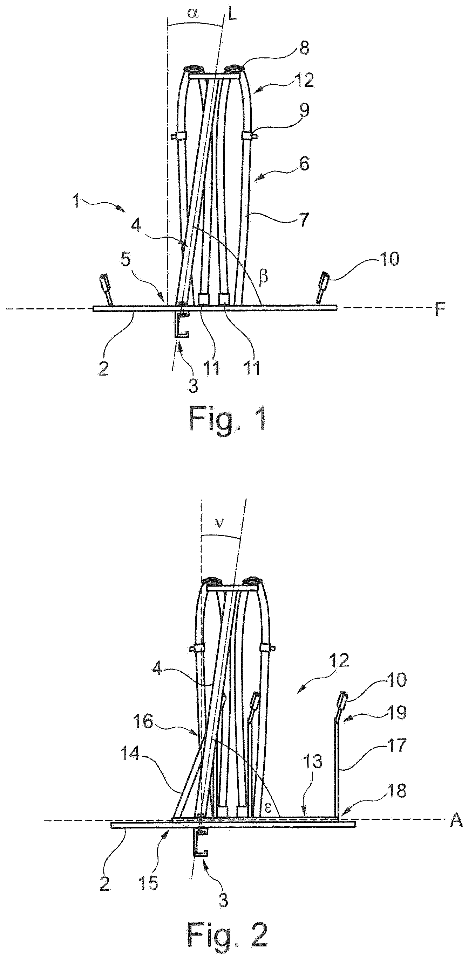

In Figur 1 ist ein Gurtgestell 1 gezeigt, welches an einem Fahrzeugboden 2 eines Fahrzeugs (nicht gezeigt) angeordnet und an einem Fahrzeugrahmen 3 des Fahrzeugs mittels Befestigungsmittel, z.B. in Form von Schrauben oder Nieten, befestigt ist.

Beispielsweise umfasst das Gurtgestell 1 eine Vertikalstrebe 4, welche an einem ersten Ende 5 am Fahrzeugboden 2 aufstehend angeordnet ist. Außerdem kann das Gurtgestell 1 ein Personenrückhaltesystem 6 aufweisen. Beispielweise umfasst das Personenrückhaltesystem 6 einen Sicherheitsgurt 7, eine Gurtumlenkanordnung 8, ein Gurtschloss 9, ein Schließelement 10 und/oder eine Gurtbefestigung 11.

Beispielsweise ist an einem zweiten Ende 12 der Vertikalstrebe 4 die Gurtumlenkanordnung 8 befestigt. Zum Beispiel ist am Fahrzeugboden 2 das Schließelement 10 unmittelbar angeordnet.

Beispielsweise erstreckt sich der Fahrzeugboden 2 in einer Fahrzeugbodenebene F und die Vertikalstrebe 4 entlang einer Längsachse L. Zum Beispiel schließen die Fahrzeugbodenebene F und die Längsachse L der Vertikalstrebe 4 einen Winkel β ein. Beispielsweise schließen die Normale des Fahrzeugbodens F und die Längsachse L der Vertikalstrebe 4 einen Winkel α ein.

Das Gurtgestell 12 gemäß Figur 2 unterscheidet sich vom Gurtgestell 1 gemäß Figur 1 darin, dass das Gurtgestell 12 neben der Vertikalstrebe 4 ein Anbringelement 13 aufweist. Beispielsweise ist das Anbringelement 13 in Form einer Platte ausgebildet.

Die Vertikalstrebe 4 ist aufstehend auf dem Anbringelement 13 vorhanden. Beispielsweise ist das Anbringelement 13 im angeordneten Zustand des Gurtgestells 12 am Fahrzeugboden 2 aufliegend vorhanden. Denkbar ist, dass im angeordneten Zustand des Gurtgestells 12 am Fahrzeugboden 2 das Anbringelement 13 mit dem Fahrzeugrahmen 3 über Befestigungsmittel verbunden ist. Vorstellbar ist außerdem, dass die Vertikalstrebe 4 mit dem Anbringelement 13 verbunden ist, sodass die Vertikalstrebe 4 über das Anbringelement 13 im angeordneten Zustand des Gurtgestells 12 am Fahrzeugboden 2 mit dem Fahrzeugrahmen 3 verbunden ist.

Beispielsweise erstreckt sich das Anbringelement 13 in einer Anbringebene A. Zum Beispiel schließt die Längsachse L der Vertikalstrebe 4 mit der Anbringebene A eine Winkel ε ein. Beispielsweise schließen eine Normale der Anbringebene A und die Längsachse L der Vertikalstrebe 4 einen Winkel ϑ ein.

Beispielsweise umfasst das Gurtgestell 12 ein Stützelement 14. Beispielsweise ist das Stützelement 14 mit einem ersten Ende 15 am Anbringelement 13 befestigt und mit einem zweiten Ende 16 an der Vertikalstrebe 4. Vorstellbar ist außerdem, dass am Anbringelement 13 ein Verlängerungselement 17 angeordnet ist. Beispielsweise ist das Verlängerungselement 17 in Form einer Gurtpeitsche vorhanden. Zum Beispiel ist das Verlängerungselement 17 mit einem ersten Ende 18 am Anbringelement 13 befestigt und von diesem mit einem zweiten Ende 19 abstehend vorhanden. Beispielsweise ist am zweiten Ende 19 des Verlängerungselements 17 ein Schließelement 10 ausgebildet.

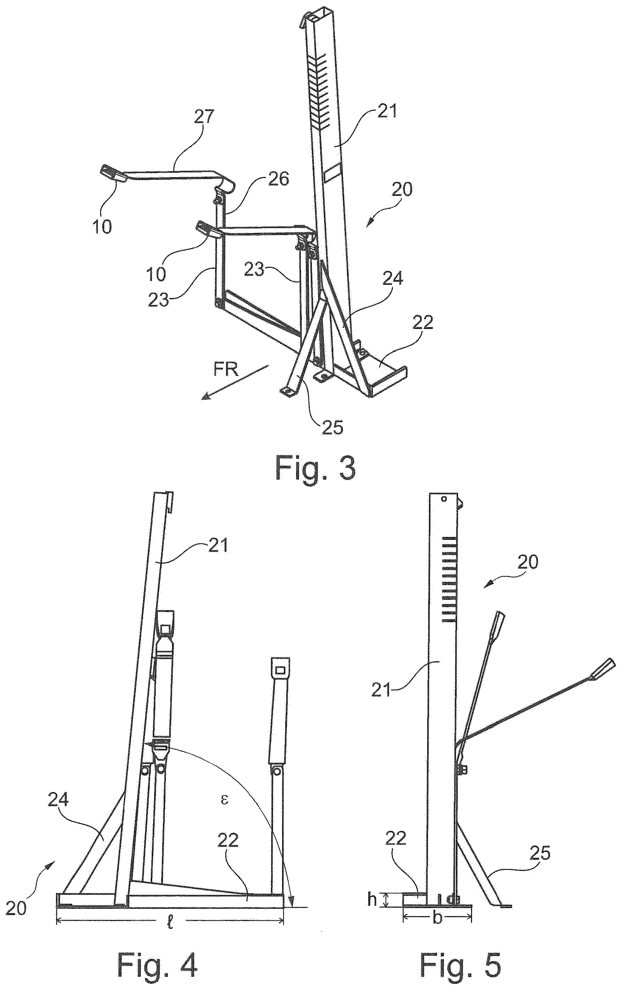

In Figur 3 ist eine weitere Ausführungsform eines Gurtgestells 20 gezeigt. Beispielsweise umfasst das Gurtgestell 20 eine Vertikalstrebe 21, ein Anbringelement 22, Verlängerungselemente 23, ein erstes Stützelement 24 und/oder ein zweites Stützelement 25.

Beispielsweise ist das Anbringelement 22 gemäß Figur 3 als ein abgekantetes Blechbiegeelement ausgebildet. Beispielsweise erstreckt sich das Anbringelement 22 in eine Länge l, eine Breite b und in eine Höhe h (siehe auch Figuren 4, 5).

Zum Beispiel ist am Gurtgestell 20 das zweite Stützelement 25 in Form eines Stützfuß ausgebildet, sodass das zweite Stützelement 25 die Vertikalstrebe 21 im Belastungsfall im angeordneten Zustand am Fahrzeug in eine Fahrtrichtung FR nach unten zum Fahrzeugboden abstützt. Beispielsweist umfasst das Gurtgestell 20 das erste Stützelement 24, welches die Vertikalstrebe 21 analog zum Stützelement 14 gemäß der Ausführung des Gurtgestells 12 seitlich abstützt.

Beispielsweise sind am Anbringelement 22 des Gurtgestells 20 in vertikaler Richtung vom Anbringelement 22 abstehende Verlängerungselemente 23 angeordnet. Zum Beispiel sind die Verlängerungselemente 23 aus einer Metallstrebe 26 und einem daran angeordneten, z.B. flexiblem, Gurtband 27 gebildet, an dessen Ende ein Schließelement 10 angeordnet ist.

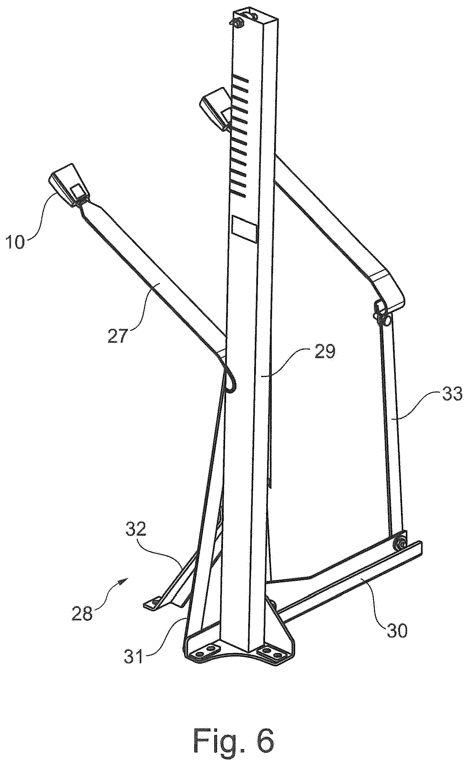

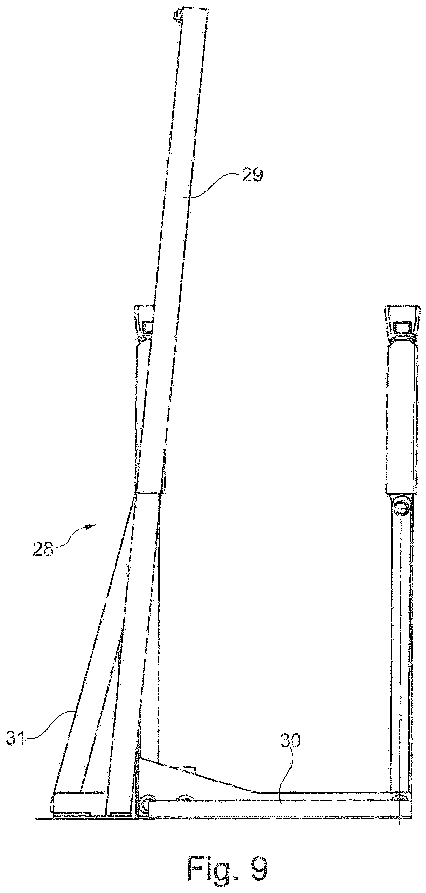

In den Figuren 6 bis 9 ist eine weitere Ausführungsform eines Gurtgestells 28 gezeigt. Beispielsweise umfasst das Gurtgestell 28 eine Vertikalstrebe 29, ein Anbringelement 30, ein erstes Stützelement 31, ein zweites Stützelement 32 und/oder ein Verlängerungselement 33.

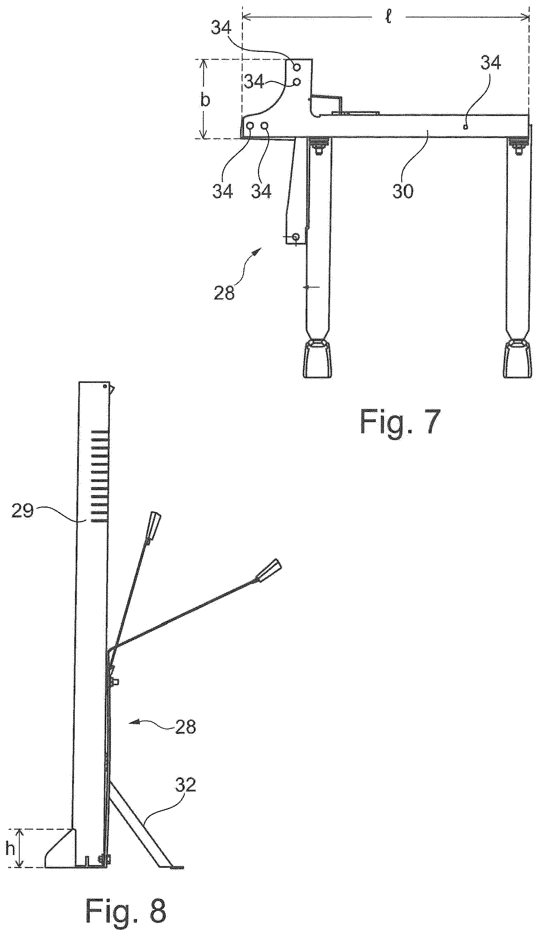

In Figur 7 ist gezeigt, dass am Anbringelement 30 Montageorgane 34 ausgebildet sind, um das Anbringelement 30 im angeordneten Zustand am Fahrzeug mit dem Fahrzeug zu verbinden. Beispielsweise sind die Montageorgane 34 in Form von Durchgangslöchern oder Bohrungen am Anbringelement 30 ausgebildet.

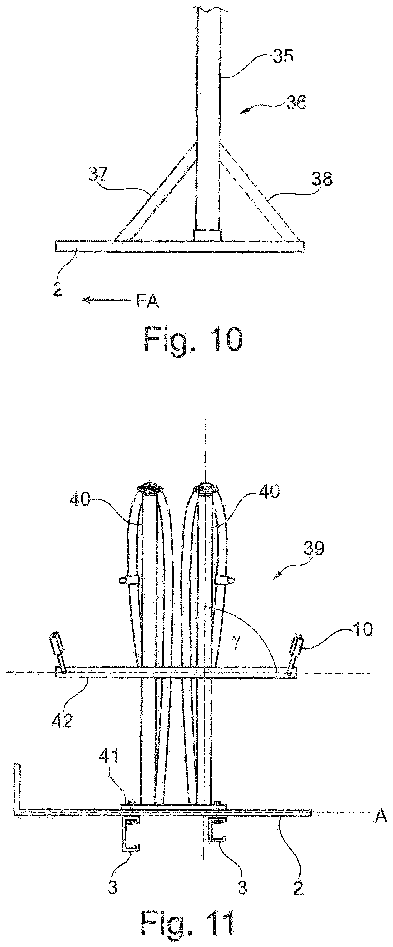

In Figur 10 ist schematisch dargestellt, dass eine Vertikalstrebe 35 eines Gurtgestells 36 durch ein Stützelement 37, 38 entweder in Fahrtrichtung FA oder entgegen der Fahrtrichtung FA im angeordneten Zustand am Fahrzeug abstützbar ist.

In Figur 11 ist eine weitere Ausführungsform eines Gurtgestells 39 gezeigt. Beispielsweise umfasst das Gurtgestell 39 zwei Vertikalstreben 40. Zum Beispiel sind die beiden Vertikalstreben 40 zueinander parallel ausgerichtet vorhanden. Denkbar ist, dass die Längsachsen der Vertikalstreben 40 zueinander parallel ausgerichtet vorhanden sind. Zum Beispiel umfasst das Gurtgestell 40 ein Anbringelement 41 und eine Horizontalstrebe 42. Beispielsweise ist die Horizontalstrebe 42 quer zur Längserstreckung der Vertikalstreben 409 ausgerichtet vorhanden. Beispielsweise ist an der Horizontalstrebe 42 ein Schließelement 10 angeordnet.

Beispielweise sind die Vertikalstreben 40 relativ zum Fahrzeugboden 2 oder zur Anbringebene A des Anbringelements 41 gekippt vorhanden, **z.B.** in die Bildebene nach hinten. Schematisch ist hierzu in Figur 11 der Winkel γ der Längsachse L der Vertikalstrebe 40 relativ zur Längsachse der Horizontalstrebe 42 angedeutet.

**Bezugszeichenliste**

| | | | |
|---|---|---|---|
| 1 | Gurtgestell | 37 | Stützelement |
| 2 | Fahrzeugboden | 38 | Stützelement |
| 3 | Fahrzeugrahmen | 39 | Gurtgestell |
| 4 | Vertikalstrebe | 40 | Vertikalstrebe |
| 5 | Ende | 41 | Anbringelement |
| 6 | Personenrückhaltesystem | 42 | Horizontalstrebe |
| 7 | Sicherheitsgurt | | |
| 8 | Gurtumlenkanordnung | | |
| 9 | Gurtschloss | | |
| 10 | Schließelement | | |
| 11 | Gurtbefestigung | | |
| 12 | Gurtgestell | | |
| 13 | Anbringelement | | |
| 14 | Stützelement | | |
| 15 | Ende | | |
| 16 | Ende | | |
| 17 | Verlängerungselement | | |
| 18 | Ende | | |
| 19 | Ende | | |
| 20 | Gurtgestells | | |
| 21 | Vertikalstrebe | | |
| 22 | Anbringelement | | |
| 23 | Verlängerungselemente | | |
| 24 | Stützelement | | |
| 25 | Stützelement | | |
| 26 | Metallstrebe | | |
| 27 | Gurtband | | |
| 28 | Gurtgestell | | |
| 29 | Vertikalstrebe | | |
| 30 | Anbringelement | | |
| 31 | Stützelement | | |
| 32 | Stützelement | | |
| 33 | Verlängerungselement | | |
| 34 | Montageorgan | | |
| 35 | Vertikalstrebe | | |
| 36 | Gurtgestell | | |

## Patentansprüche

1. Gurtgestell (1, 12, 20, 28, 36, 39) für einen Fahrzeugsitz oder eine Fahrzeugsitzbank in einem Fahrzeug, wobei das Gurtgestell (1, 12, 20, 28, 36, 39) ein Anbringelement (13, 22, 30, 41), eine Vertikalstrebe (4, 21, 29, 35, 40) und ein Personenrückhaltesystem aufweist, wobei das Anbringelement (13, 22, 30, 41) dazu ausgebildet ist, an einer Fahrzeugstruktur des Fahrzeugs im Bereich eines Fahrzeugbodens (2) angeordnet zu werden, sodass das Gurtgestell (1, 12, 20, 28, 36, 39) im Bereich des Fahrzeugbodens (2) fixierbar ist, wobei die Vertikalstrebe (4, 21, 29, 35, 40) an einem ersten Ende (5) der Vertikalstrebe (4, 21, 29, 35, 40) mit dem Anbringelement (13, 22, 30, 41) verbunden ist, wobei die Vertikalstrebe (4, 21, 29, 35, 40) am ersten Ende (5) aufstehend auf dem Anbringelement vorhanden ist, wobei eine Längsachse der Vertikalstrebe (4, 21, 29, 35, 40) sich in Richtung der Vertikalen erstreckt, wobei ein Rückhalteorgan (10) des Personenrückhaltesystems (6) am Anbringelement (13, 22, 30, 41) befestigt ist, wobei das Anbringelement (13, 22, 30, 41) als eine Platte, als ein Winkelblech oder als eine Leiste ausgebildet ist, wobei das Personenrückhaltesystem einen Sicherheitsgurt, einen Gurtaufroller, ein Gurtumlenkelement, eine Gurtschließe und ein Gurtschloss aufweist, wobei das Gurtgestell (1, 12, 20, 28, 36, 39) eine Gurtpeitsche (17) aufweist, wobei das Gurtschloss des Personenrückhaltesystems über die Gurtpeitsche (17) mit dem Anbringelement (13, 22, 30, 41) verbunden ist, wobei die Gurtpeitsche in Form eines Gurtbands und/oder in Form eines Metallbands vorhanden ist, wobei das Gurtumlenkelement im Bereich eines zweiten Endes der Vertikalstrebe ausgebildet ist, wobei der Gurtaufroller am Anbringelement oder an der Vertikalstrebe befestigt ist.

2. Gurtgestell (1, 12, 20, 28, 36, 39) nach einem der vorangegangenen Ansprüche, **dadurch gekennzeichnet, dass** der Sicherheitsgurt mit einem ersten Ende des Sicherheitsgurts mit dem Anbringelement verbunden ist, wobei der Sicherheitsgurt mit einem zweiten Ende des Sicherheitsgurts mit dem Gurtaufroller verbunden ist.

3. Gurtgestell (1, 12, 20, 28, 36, 39) nach einem der vorangegangenen Ansprüche, **dadurch gekennzeichnet, dass** am Anbringelement (13, 22, 30, 41) ein Stützfuß (14, 24, 25) angeordnet ist.

4. Gurtgestell (1, 12, 20, 28, 36, 39) nach einem der vorangegangenen Ansprüche, **dadurch gekennzeichnet, dass** das Anbringelement (13, 22, 30, 41) aus Metall ausgebildet ist.

5. Gurtgestell (1, 12, 20, 28, 36, 39) nach einem der vorangegangenen Ansprüche, **dadurch gekennzeichnet, dass** die Vertikalstrebe (4, 21, 29, 35, 40) unlösbar mit dem Anbringelement (13, 22, 30, 41) verbunden ist.

6. Gurtgestell (1, 12, 20, 28, 36, 39) nach einem der vorangegangenen Ansprüche, **dadurch gekennzeichnet, dass** am Anbringelement (13, 22, 30, 41) zwei oder mehr Rückhalteorgane (10) des Personenrückhaltesystems angeordnet sind.

7. Gurtgestell (1, 12, 20, 28, 36, 39) nach einem der vorangegangenen Ansprüche, **dadurch gekennzeichnet, dass** am Anbringelement (13, 22, 30, 41) ein Montageorgan (34) ausgebildet ist, wobei das Montageorgan (34) dazu ausgebildet ist, im angeordneten Zustand des Gurtgestells (1, 12, 20, 28, 36, 39) am Fahrzeug das Anbringelement (13, 22, 30, 41) mit einer Fahrzeugstruktur eines Fahrzeugs zu verbinden.

8. Fahrzeug-Sitzanordnung, wie ein Fahrzeugsitz oder eine Fahrzeugsitzbank, mit einem Gurtgestell (1, 12, 20, 28, 36, 39) nach einem der vorangegangen genannten Ansprüche.

9. Fahrzeug mit einer Fahrzeug-Sitzanordnung nach dem vorangegangenen Anspruch 8 oder mit einem Gurtgestell (1, 12, 20, 28, 36, 39) nach einem der vorangegangenen Ansprüche 1 bis 7.

## Claims

1. Belt frame (1, 12, 20, 28, 36, 39) for a vehicle seat or a vehicle seat bench in a vehicle, wherein the belt frame (1, 12, 20, 28, 36, 39) has an attachment element (13, 22, 30, 41), a vertical strut (4, 21, 29, 35, 40) and a passenger restraint system, wherein the attachment element (13, 22, 30, 41) is designed to be arranged on a vehicle structure of the vehicle in the region of a vehicle floor (2), so that the belt frame (1, 12, 20, 28, 36, 39) can be fixed in the region of the vehicle floor (2), wherein the vertical strut (4, 21, 29, 35, 40) is connected, at a first end (5) of the vertical strut (4, 21, 29, 35, 40), to the attachment element (13, 22, 30, 41), wherein the vertical strut (4, 21, 29, 35, 40) is present standing, at the first end (5), on the attachment element, wherein a longitudinal axis of the vertical strut (4, 21, 29, 35, 40) extends in the direction of the vertical, wherein a restraint member (10) of the passenger restraint system (6) is fastened to the attachment element (13, 22, 30, 41), wherein the attachment element (13, 22, 30, 41) is designed as a plate, as an angle plate or as a bar, wherein the passenger restraint system has a seat belt, a belt retractor, a belt deflection element, a belt tongue and a belt buckle, wherein the belt frame (1, 12, 20, 28, 36, 39) has a belt stalk (17), wherein the belt buckle of the passenger restraint system is connected via the belt stalk (17) to the attachment element (13, 22, 30, 41), wherein the belt stalk is in the form of a belt band and/or in the form of a metal band, wherein the belt deflection element is formed in the region of a second end of the vertical strut, wherein the belt retractor is fastened to the attachment element or to the vertical strut.

2. Belt frame (1, 12, 20, 28, 36, 39) according to any one of the preceding claims, **characterized in that** the seat belt is connected with a first end of the seat belt to the attachment element, wherein the seat belt is connected with a second end of the seat belt to the belt retractor.

3. Belt frame (1, 12, 20, 28, 36, 39) according to any one of the preceding claims, **characterized in that** a support foot (14, 24, 25) is arranged on the attachment element (13, 22, 30, 41).

4. Belt frame (1, 12, 20, 28, 36, 39) according to any one of the preceding claims, **characterized in that** the attachment element (13, 22, 30, 41) is made of metal.

5. Belt frame (1, 12, 20, 28, 36, 39) according to any one of the preceding claims, **characterized in that** the vertical strut (4, 21, 29, 35, 40) is connected non-releasably to the attachment element (13, 22, 30, 41).

6. Belt frame (1, 12, 20, 28, 36, 39) according to any one of the preceding claims, **characterized in that** two or more restraint members (10) of the passenger restraint system are arranged on the attachment element (13, 22, 30, 41).

7. Belt frame (1, 12, 20, 28, 36, 39) according to any one of the preceding claims, **characterized in that** an assembly member (34) is formed on the attachment element (13, 22, 30, 41), wherein the assembly member (34), in the state with the belt frame (1, 12, 20, 28, 36, 39) attached to the vehicle, is designed to connect the attachment element (13, 22, 30, 41) to a vehicle structure.

8. Vehicle seating arrangement, such as a vehicle seat or a vehicle seat bench, with a belt frame (1, 12, 20, 28, 36, 39) according to any one of the preceding claims.

9. Vehicle with a vehicle seating arrangement according to the preceding Claim 8 or with a belt frame (1, 12, 20, 28, 36, 39) according to any one of the preceding Claims 1 to 7.

## Revendications

1. Support de ceinture (1, 12, 20, 28, 36, 39) pour un siège de véhicule ou une banquette de véhicule dans un véhicule, le support de ceinture (1, 12, 20, 28, 36, 39) comprenant un élément de fixation (13, 22, 30, 41), une barre verticale (4, 21, 29, 35, 40) et un système de retenue de passager, l'élément de fixation (13, 22, 30, 41) étant conçu de façon à être agencé sur une structure du véhicule dans la zone du plancher (2) du véhicule, de sorte que le support de ceinture (1, 12, 20, 28, 36, 39) puisse être fixé dans la zone du plancher du véhicule (2), la barre verticale (4, 21, 29, 35, 40) étant reliée à l'élément de fixation (13, 22, 30, 41) à une première extrémité (5) de la barre verticale (4, 21, 29, 35, 40), la barre verticale (4, 21, 29, 35, 40) étant placée de manière dressée sur l'élément de fixation par la première extrémité (5), un axe longitudinal de la barre verticale (4, 21, 29, 35, 40) s'étendant dans la direction verticale, un organe de retenue (10) du système (6) de retenue de passager étant fixé à l'élément de fixation (13, 22, 30, 41), l'élément de fixation (13, 22, 30, 41) étant conçu sous la forme d'une plaque, d'une tôle d'angle ou d'une baguette, le système de retenue de passager comprenant une ceinture de sécurité, un enrouleur de ceinture, un élément de renvoi de ceinture, une boucle de ceinture et une fixation de ceinture, le support de ceinture (1, 12, 20, 28, 36, 39) comprenant un renvoi de ceinture (17), la boucle du système de retenue de passager étant reliée à l'élément de fixation (13, 22, 30, 41) par l'intermédiaire du renvoi de ceinture (17), le renvoi de ceinture se présentant sous la forme d'une sangle et/ou d'une bande métallique, l'élément de renvoi de ceinture étant formé dans la zone d'une deuxième extrémité de la barre verticale, l'enrouleur de ceinture étant fixé à l'élément de fixation ou à la barre verticale.

2. Support de ceinture (1, 12, 20, 28, 36, 39) selon l'une des revendications précédentes, **caractérisé en ce que** la ceinture de sécurité est reliée à l'élément de fixation par une première extrémité de la ceinture de sécurité, la ceinture de sécurité étant reliée à l'enrouleur de ceinture par une deuxième extrémité de la ceinture de sécurité.

3. Support de ceinture (1, 12, 20, 28, 36, 39) selon l'une des revendications précédentes, **caractérisé en ce qu'**un pied d'appui (14, 24, 25) est agencé sur l'élément de fixation (13, 22, 30, 41).

4. Support de ceinture (1, 12, 20, 28, 36, 39) selon l'une des revendications précédentes, **caractérisé en ce que** l'élément de fixation (13, 22, 30, 41) est en métal.

5. Support de ceinture (1, 12, 20, 28, 36, 39) selon l'une des revendications précédentes, **caractérisée en ce que** la barre verticale (4, 21, 29, 35, 40) est reliée de manière inamovible à l'élément de fixation (13, 22, 30, 41).

6. Support de ceinture (1, 12, 20, 28, 36, 39) selon l'une des revendications précédentes, **caractérisé en ce que** deux ou plusieurs organes de retenue (10) du système de retenue de passager sont agencés sur l'élément de fixation (13, 22, 30, 41).

7. Support de ceinture (1, 12, 20, 28, 36, 39) selon l'une des revendications précédentes, **caractérisé en ce qu'**un organe de montage (34) est formé sur l'élément de fixation (13, 22, 30, 41), l'organe de montage (34) étant conçu de manière à relier l'élément de fixation (13, 22, 30, 41) à une structure de véhicule lorsque le support de ceinture (1, 12, 20, 28, 36, 39) est monté sur le véhicule.

8. Agencement de siège de véhicule, tel qu'un siège de véhicule ou une banquette de véhicule, comprenant un support de ceinture (1, 12, 20, 28, 36, 39) selon l'une des revendications précédentes.

9. Véhicule comprenant un agencement de siège selon la revendication 8 ci-dessus ou avec un support de ceinture (1, 12, 20, 28, 36, 39) selon l'une des revendications 1 à 7 ci-dessus.
